# EUROPEAN PATENT APPLICATION

(11) **EP 4 571 160 A1**
(43) Date of publication of application: **18.06.2025**
(21) Application number: 23217041.5
(22) Date of filing: 15.12.2023
(51) Int. Cl.: F16K 11/044, F16K 27/02, F16K 47/08

(54) **A VALVE WITH A FLOW GUIDING INSERT**

(71) Applicant: Danfoss A/S, 6430 Nordborg (DK)
(72) Inventor: CLAUSEN, Anders Østergaard, 6430 Nordborg (DK); DROBEZ, Benjamin, 6430 Nordborg (DK)
(74) Representative: Inspicos P/S

(57) **Abstract**

A valve (1) comprising a valve housing (2) with a first port (4) and a second port (5) and accommodating a valve element (8) being movable between a first end position and a second end position is disclosed. The valve element (8) may be movable along a first opening (13) towards the second port (5), and the valve (1) further comprises at least one first flow guiding insert (15) mounted in the valve housing (2) in a flow path interconnecting the first port (4) and the second port (5), e.g. between the first opening (13) and the second port (5), near the first opening (13), so as to guide a fluid flow, e.g. towards or away from the first opening (13).

## Description

### FIELD OF THE INVENTION

The present invention relates to a valve with a valve housing accommodating a movable valve element for controlling a fluid flow through the valve. The valve according to the invention is provided with at least one flow guiding insert.

### BACKGROUND OF THE INVENTION

Controllable valves normally comprise a movable valve element accommodated in a valve housing in such a manner that movements of the valve element control the fluid flow through the valve. For instance, the position of the movable valve element may determine at least one opening degree of the valve. The movements of the valve element, and thereby the fluid flow through the valve, may be controlled by appropriately controlling an actuator being operably connected to the movable valve element.

The valve element may, e.g., move along at least one opening formed inside the valve, in such a manner that the position of the valve element relative to the opening defines a cross sectional size of the opening being available for fluid flowing therethrough, thus defining an opening degree of the valve with respect to a fluid connection which includes the opening.

The regions near such openings may define abrupt obstacles and/or changes in the cross section of the flow path. This may create turbulence and/or other undesired flow effects in the fluid flowing through the valve, such as hammering. This is in particular a problem in valves with high flow rate.

### DESCRIPTION OF THE INVENTION

It is an object of embodiments of the invention to provide a valve in which the risk of turbulence and/or other undesired flow effects in the fluid flowing through the valve is reduced.

The invention provides a valve comprising a valve housing with a first port and a second port, the valve housing accommodating a valve element being movable between a first end position and a second end position, the first end position defining a fully open fluid connection between the first port and the second port, and the second end position defining a fully closed fluid connection between the first port and the second port, and where intermediate positions of the valve element define a partly open fluid connection between the first port and the second port,
wherein the valve element is positioned between the first port and the second port, and wherein the valve further comprises at least one first flow guiding insert mounted in the valve housing in a flow path interconnecting the first port and the second port, so as to guide a fluid flow in the flow path.

The valve element may, e.g., be movable along a first opening towards the second port, and the at least one first flow guiding insert may be mounted in the valve housing in a flow path interconnecting the first opening and the second port, near the first opening, so as to guide a fluid flow towards or away from the first opening.

Thus, the valve according to the invention comprises a valve housing with a first port and a second port, the valve thus defining a fluid connection between the first port and the second port. Fluid flowing through the valve may flow in either direction, i.e. from the first port, acting as a fluid inlet, to the second port, acting as a fluid outlet, or from the second port, acting as a fluid inlet, to the first port, acting as a fluid outlet. The direction of the fluid flow through the valve may even be selected, depending on the requirements at a given point in time.

The valve housing accommodates a valve element being movable between a first end position and a second end position. The first end position defines a fully open fluid connection between the first port and the second port, and the second end position defines a fully closed fluid connection between the first port and the second port. Thus, when the valve element is in the second end position, the fluid connection between the first port and the second port is fully closed, and no fluid flows in the fluid connection. If the valve element is moved away from the second end position, the fluid connection between the first port and the second port is gradually opened until the first end position is reached, where the fluid connection is fully open. Accordingly, when the valve element is arranged in intermediate positions between the first end position and the second end position, the fluid connection between the first port and the second port is partly open. Thus, the position of the valve element determines the fluid flow through the fluid connection between the first port and the second port, and thereby through the valve.

The valve element is positioned between the first port and the second port, and the valve further comprises at least one first flow guiding insert mounted in the valve housing in a flow path interconnecting the first port and the second port. Thus, the at least one first flow guiding insert guides a fluid flow in this flow path.

The valve element may be movable along a first opening towards the second port, the first opening thus being arranged in or forming part of the fluid connection between the first port and the second port. Accordingly, in this case, the position of the valve element relative to the first opening defines a cross sectional size of the first opening being available for fluid flowing therethrough, thus defining an opening degree of the valve with respect to the fluid connection between the first port and the second port.

In this case, the at least one first flow guiding insert may be mounted in the valve housing in a flow path interconnecting the first opening and the second port, in a region near the first opening. Thus, according to this embodiment, the at least one first flow guiding insert guides a fluid flow from the first opening towards the second port or from the second port towards the first opening, depending on the direction of the fluid flow in the fluid connection between the first port and the second port.

The guiding of the fluid flow provided by the at least one first flow guiding insert ensures that the fluid flow in the flow path interconnecting the first port and the second port, e.g. in the region near the first opening, is smooth and essentially without abrupt obstacles and/or changes in the cross section of the flow path. Accordingly, the risk of introducing turbulence and/or other undesired flow effects, such as hammering, in the fluid flowing through the valve is minimised. This improves the performance of the valve and reduces the risk of noise, even if the flow rate of the valve is high.

Furthermore, since the guiding of the fluid flow is provided by an insert, i.e. a by a separate element rather than by a feature formed directly in the valve housing, this can be obtained in an accurate and cost effective manner. For instance, the flow guiding insert can easily be manufactured with a desired shape and size which provides a desired guidance of the fluid flow, and which matches the requirements of a specific valve to be used in a specific context, while using a standard or generic valve housing. Thereby a variety of customized valves can be provided using standard parts, thus obtaining this without unduly increasing the manufacturing costs. In addition, the at least one flow guiding insert may be retrofitted on existing valves, thus improving the performance of the existing valve.

The at least one first flow guiding insert may define a tapered inner surface, and a cross sectional diameter of a flow path through the at least one first flow guiding insert may increase in a direction away from the first opening.

The tapered inner surface may provide a smooth transition between a cross section defined by the first opening and a cross section defined by the flow path interconnecting the first opening and the second port.

According to this embodiment, the cross sectional diameter defined by the first opening may be smaller than the cross sectional diameter defined by the flow path interconnecting the first opening and the second port. The tapered inner surface of the at least one first flow guiding insert provides a smooth transition between the smaller cross sectional diameter of the first opening and the larger cross sectional diameter of the flow path interconnecting the first opening and the second port, thus minimising the risk of turbulence and/or other undesired flow effects.

The at least one first flow guiding insert may be made from a composite material. The composite material could, e.g., be a polymer based material, e.g. polyphenylene sulfide (PPS), polybutylene terephthalate (PBT), glass filled polymer (GF), acrylonitrile butadine styrene (ABS), polycarbonate (PC), or a combination of two of more of these materials. Such composite materials are known to be durable, low cost and lightweight. Accordingly, forming the first flow guiding insert from a composite material results in a flow guiding insert which is durable and lightweight, and can be manufactured at low costs. Furthermore, it is easy to manufacture the flow guiding insert with a shape and size which matches various requirements of the valve, e.g. with regard to flow characteristics.

Other parts of the valve, e.g. the valve housing and/or the valve element, may further be made from a composite material. For instance, the valve element may be made from polyphenylsulfone (PPSU). This would, e.g. allow for a valve element with a complex shape to be provided in an easy and cost effective manner.

The first opening may be provided with a lip along an edge of the first opening, the lip abutting the valve element at least in a region near the first opening. According to this embodiment, when the valve element moves along the first opening, it remains in abutment with the lip along the edge of the opening. This ensures that the cross sectional size and shape of the first opening being available for fluid flow, when the valve element is in a given position, is very well defined. Accordingly, a very well defined opening degree is obtained, resulting in very accurate and reliable flow characteristic of the valve. Furthermore, the lip allows for the flow characteristic of the valve to be designed to match certain requirement. For instance, the flow characteristic may be linear, but alternative flow characteristics may also be obtained. Thus, the valve can be controlled in a very accurate and reliable manner. Moreover, the abutment between the valve element and the lip may reduce the risk of internal leaks in the region near the movable valve element.

In the present context the term 'lip' should be interpreted to mean a relatively narrow feature arranged along the edge of the opening. For instance, the lip may be formed as a protrusion on the part of the valve where the opening is formed, and could, e.g., be moulded directly as a portion of that part during manufacture. As an alternative, the lip may be a separate part mounted on the part of the valve where the opening is formed.

Thus, since the abutment between the valve element and the edge of the first opening is obtained via a lip provided along the edge of the opening, the accurate control of the valve is obtained with minimal risk of friction between the valve element and adjacent parts of the valve during movement of the valve element, due to the small potential contact area, e.g. in case of deposited impurities, thus reducing sticking or similar which could affect the accuracy of the control of the valve.

The lip may follow a tapered or curved path along the edge of the first opening. For instance, the edge may follow a tapered or curved path, and the lip may follow the path of the edge. Such a tapered or curved path ensures that the opening and closing of the fluid connection between the first port and the second port is performed smoothly, thus significantly reducing the risk of undesired flow effects, such as hammering. Furthermore, the tapered or curved path may be designed in a manner which provides a substantially linear relationship between the position of the valve element and a fluid flow through the first opening, thus making it easier to accurately control the valve.

The first opening may have a shape which is narrower in a region near the second end position than in a region near the first end position. According to this embodiment, the cross sectional shape of the first opening is such that a narrow opening or flow passage is defined when the valve element is in a position near the second end position, i.e. when it is close to the fully closed position. On the other hand, when the valve element is close to the first end position, i.e. when it is close to the fully open position, a wider opening or flow passage is defined. This ensures that, when the valve element is moved away from the second end position, thus opening the passage through the first opening, this results in a gradual and smooth opening of the passage. Similarly, when the valve element is moved towards the second end position, thus closing the passage through the first opening, this also takes place in a gradual and smooth manner.

For instance, the first opening may have a substantially triangular shape, or a triangular-like shape with one or more of the edges of the triangle being curved. Alternatively, the first opening may have a stepped shape.

The edge of the first opening may follow a smooth curve between the region near the first end position and the region near the second end position. According to this embodiment, it is ensured that there are no abrupt changes in the cross sectional size of the flow passage through the first opening as the valve element moves between the first end position and the second end position. This provides well defined flow characteristics, accurate and reliable control of the valve, and significantly reduces the risk of undesired flow effects, such as hammering.

The at least one first flow guiding insert may be provided with a mounting interface configured to engage a mating mounting interface formed in the flow path interconnecting the first port and the second port. According to this embodiment, the at least one first flow guiding insert is mounted in the flow path interconnecting the first port and the second port by arranging the mounting interface of the flow guiding insert in engagement with the mating mounting interface of the flow path. This ensures that the at least one first flow guiding insert is mounted correctly and accurately in the flow path interconnecting the first port and the second port. Furthermore, this secures the at least one first flow guiding insert against rotation relative to the valve housing.

The valve may be a three-way valve and the valve housing may further have a third port, and the first end position may define a fully closed fluid connection between the first port and the third port and the second end position may define a fully open fluid connection between the first port and the third port, and intermediate positions of the valve element may define partly open fluid connections between the first port and each of the second port and the third port.

According to this embodiment, the valve may establish fluid connections between the first port and each of the second port and the third port. Thus, in the case that the first port forms a fluid inlet of the valve, the second port and the third port each forms a fluid outlet of the valve. In this case, fluid flow received in the valve via the first port may be selectively distributed to the second port and/or the third port. In the case that the first port forms a fluid outlet of the valve, the second port and the third port each forms a fluid inlet of the valve. In this case, fluid received in the valve via the second port and the third port, respectively, may be mixed before being supplied to the first port.

The valve element may further be movable along a second opening towards the third port. In this case, the valve element is movable along the first opening towards the second port as well as along the second opening towards the third port. Thus, the position of the valve element determines the fluid flow in the fluid connection between the first port and the second port, as well as the fluid flow in the fluid connection between the first port and the third port, essentially in the manner described above.

When the valve element is in the first end position, the fluid connection between the first port and the second port is fully open, while the fluid connection between the first port and the third port is fully closed. On the other hand, when the valve element is in the second end position, the fluid connection between the first port and the third port is fully open, while the fluid connection between the first port and the second port is fully closed. Thus, when the valve element is moved from the first end position towards the second end position, the fluid connection between the first port and the second port is gradually closed, while the fluid connection between the first port and the third port is gradually opened. Similarly, when the valve element is moved from the second end position towards the first end position, the fluid connection between the first port and the second port is gradually opened, while the fluid connection between the first port and the third port is gradually closed.

Three-way valves may, e.g., be used in heat pumps or other applications where it may be desired to mix fluid flows.

The valve may further comprise at least one second flow guiding insert mounted in the valve housing in a flow path interconnecting the first port and the third port, so as to guide a fluid flow in the flow path. For instance, the at least one second flow guiding insert may be mounted in a flow path interconnecting the second opening and the third port, near the second opening, so as to guide a fluid flow towards or away from the second opening.

According to this embodiment, the flow path interconnecting the first port and the third port, e.g. the flow path interconnecting the second opening and the third port, is provided with at least one flow guiding insert, i.e. the at least one second flow guiding insert, similarly to the at least one first flow guiding insert mounted in the flow part interconnecting the first port and the second port, guides the fluid flow in the flow path. Thus, the advantages described above are obtained with respect to the fluid connection between the first port and the second port as well as with respect to the fluid connection between the first port and the third port. Accordingly, the remarks set forth above with reference to the at least one first flow guiding insert are equally applicable here.

The at least one first flow guiding insert and the at least one second flow guiding insert may be identical and mounted in the respective flow paths with different orientation. For instance, the at least one first flow guiding insert and the at least one second flow guiding insert may be mounted in such a manner that they mirror each other. According to this embodiment, flow guiding inserts may be provided in both fluid connections with a minimal number of different parts, thus making it simpler and more cost effective to manufacture the valve.

### BRIEF DESCRIPTION OF THE DRAWINGS

The invention will now be described in further detail with reference to the accompanying drawings in which
Figs. 1 and 2 illustrate a valve according to an embodiment of the invention,
Fig. 3 is a cross sectional view of the valve of Figs. 1 and 2,
Figs. 4 and 5 are perspective cross sectional views of the valve of Fig. 3 at two different angles,
Figs. 6-9 illustrate exploded views of the valve of Figs. 3-5, and
Figs. 10a-10d are perspective views of a flow guiding insert for a valve according to an embodiment of the invention from four different angles.

### DETAILED DESCRIPTION OF THE DRAWINGS

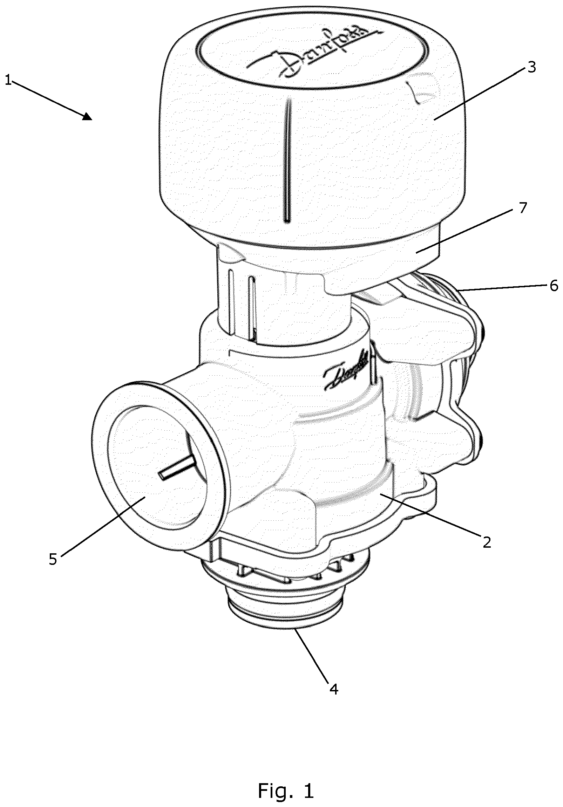

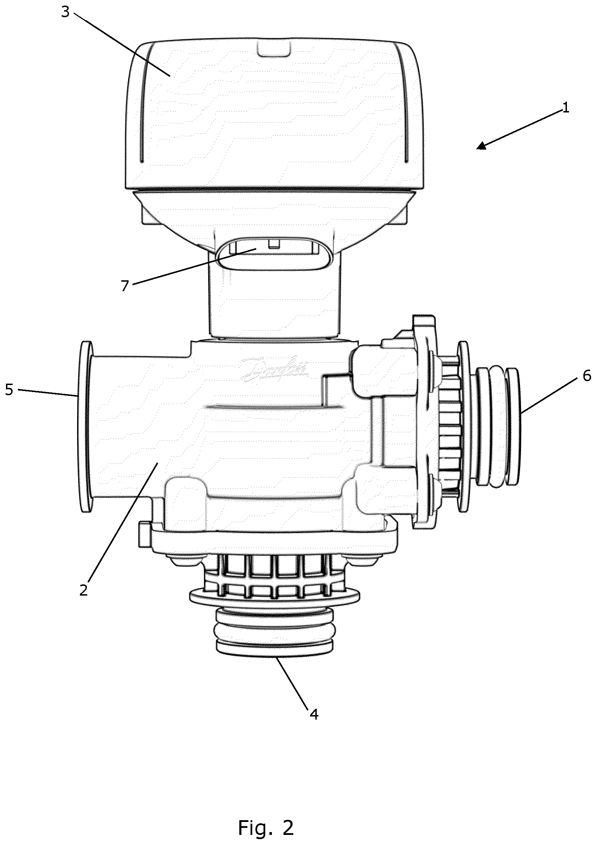

Figs. 1 and 2 illustrate a valve 1 according to an embodiment of the invention. Fig. 1 is a perspective view of the valve 1, and Fig. 2 is a side view of the valve 1.

The valve 1 comprises a valve housing 2 and an actuator housing 3 mounted on the valve housing 2. The valve housing 2 accommodates a movable valve element (not shown) and the actuator housing 3 accommodates an actuator (not shown) being operably connected to the movable valve element. Appropriate operation of the actuator will thus cause movements of the valve element, so as to control a fluid flow through the valve 1.

The valve housing 2 has three ports, in the form of a first port 4, a second port 5 and a third port 6. Fluid connections may be selectively established between the first port 4 and each of the second port 5 and the third port 6. Accordingly, the valve 1 is a three-way valve.

The actuator housing 3 comprises a power connection 7 allowing for power to be supplied to the actuator inside the actuator housing 3, for instance to an electric motor, such as an electric stepper motor, arranged inside the actuator housing 3.

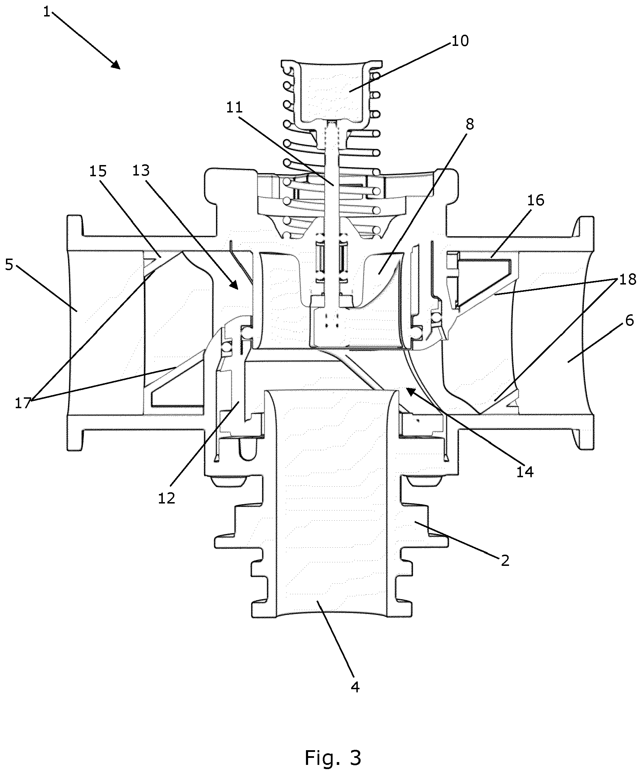

Fig. 3 is a cross sectional view of the valve 1 of Figs. 1 and 2. However, the actuator housing has been omitted for the sake of clarity. A valve element 8 is accommodated in the valve housing 2, and is adapted to be operably connected to an actuator (not shown) accommodated in the actuator housing (not shown), via a cup-shaped connecting element 10 and a valve stem 11. Thus, appropriate operation of the actuator causes the valve element 8 to move inside the valve housing 2 towards or away from the actuator housing.

The valve element 8 is arranged within a guiding insert 12 in which a first opening 13 towards the second port 5 and a second opening 14 towards the third port 6 are formed. Thus, the valve element 8 moves along the first opening 13 as well as along the second opening 14. Accordingly, the position of the valve element 8 determines the cross sectional size of the first opening 13 as well as the cross sectional size of the second opening 14 being available for fluid flow through the respective openings 13, 14, and thereby whether or not and to which extent the fluid connection between the first port 4 and the second port 5 as well as the fluid connection between the first port 4 and the third port 6 is open.

In Fig. 3, the valve element 8 is positioned in a second end position, where the fluid connection between the first port 4 and the second port 5 is fully closed, and the fluid connection between the first port 4 and the third port 6 is fully open.

The valve 1 comprises a first flow guiding insert 15 and a second flow guiding insert 16. The first flow guiding insert 15 is mounted in a flow path interconnecting the first opening 13 and the second port 5, at a position immediately adjacent to the first opening 13. The first flow guiding insert 15 defines tapered inner surfaces 17. The tapered inner surfaces 17 smoothly interconnect the large cross section of the flow path interconnecting the first opening 13 and the second port 5 to the smaller cross section of the first opening 13. Thus, the flow guiding insert 15, in particular the tapered inner surfaces 17 thereof, guides the fluid flow in the fluid connection between the first port 4 and the second port 5 towards or away from the first opening 13, depending on the direction of the fluid flow. Accordingly, a smooth fluid flow is obtained, and undesired flow effects, such as turbulence or hammering, due to the fluid passing through the first opening 13, are avoided or at least significantly reduced.

Similarly, the second flow guiding insert 16 is mounted in a flow path interconnecting the second opening 14 and the third port 6, at a position immediately adjacent to the second opening 14, and it defines tapered inner surfaces 18, thus guiding the fluid flow in the fluid connection between the first port 4 and the third port 6 essentially in the manner described above with reference to the first flow guiding insert 15.

The first flow guiding insert 15 and the second flow guiding insert 16 are identical, but mounted in the respective flow paths in such a manner that they mirror each other.

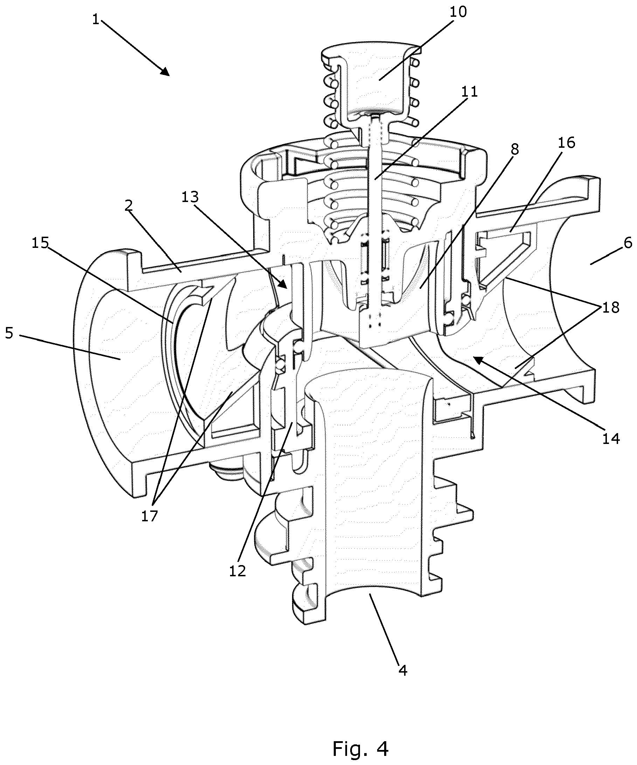

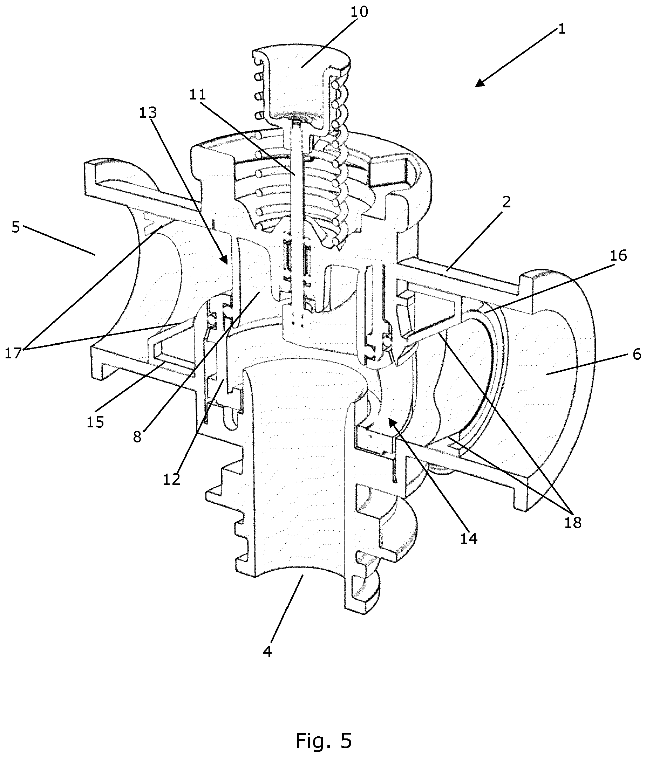

Figs. 4 and 5 are perspective cross sectional views of the valve 1 of Fig. 3 from two different angles, showing the parts arranged inside the valve housing 2 in further detail.

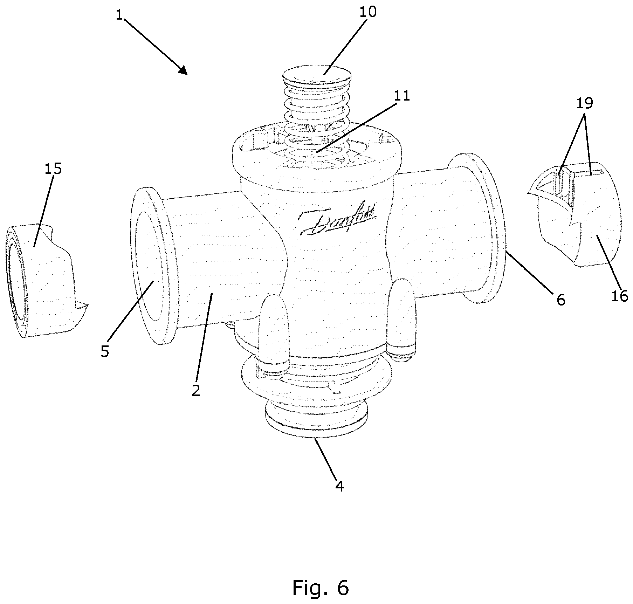

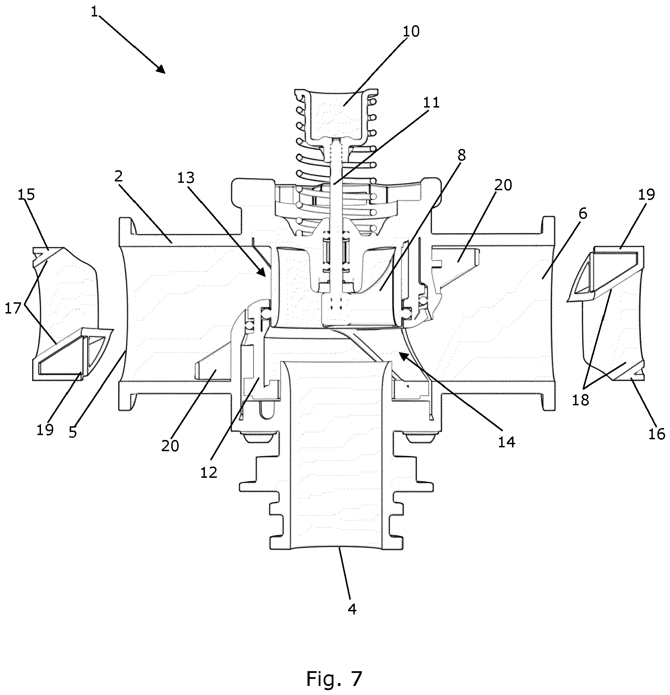

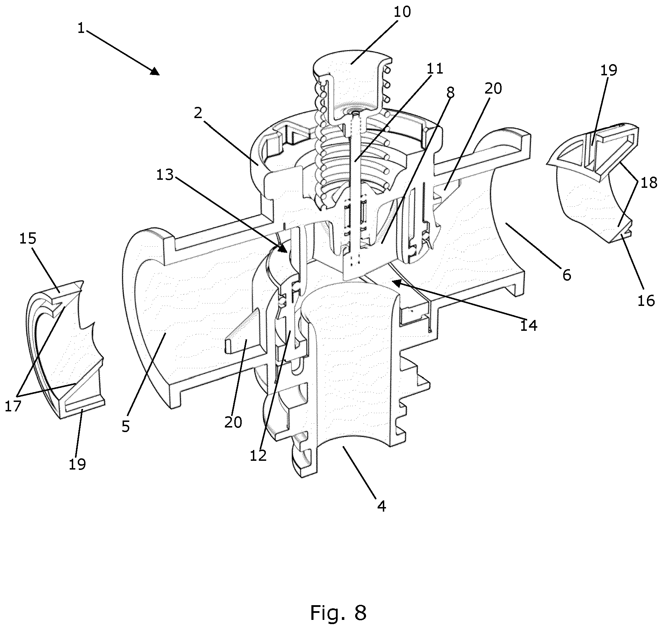

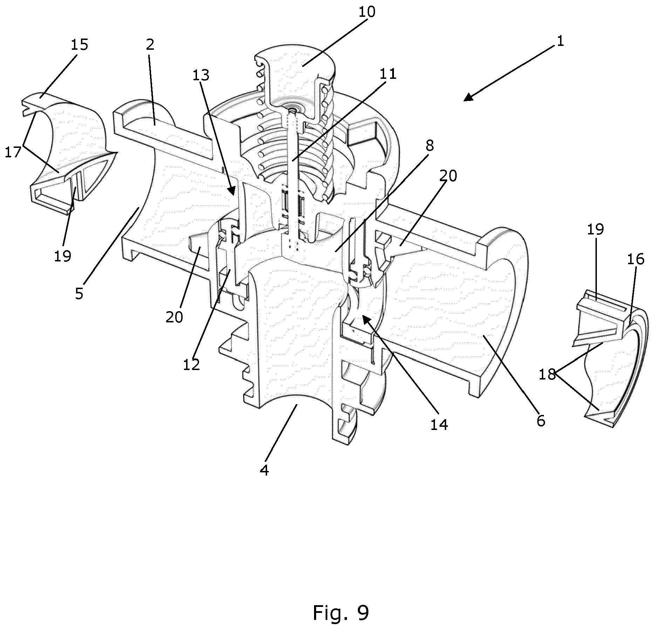

Figs. 6-9 illustrate exploded views of the valve 1 of Figs. 3-5, where the first flow guiding insert 15 and the second flow guiding insert 16 are not mounted inside the valve housing 2. Similarly to Figs. 3-6, the actuator housing has been omitted. Fig. 6 is a perspective view of the valve 1, Fig. 7 is a cross sectional view of the valve 1, and Figs. 8 and 9 are perspective cross sectional views of the valve 1 from two different angles.

It can be seen that the first flow guiding insert 15 as well as the second flow guiding insert 16 is provided with a mounting interface in the form of two grooves 19. Mating mounting interfaces in the form of protruding taps 20 are formed in the flow path interconnecting the first opening 13 and the second port 5 as well as in the flow path interconnecting the second opening 14 and the third port 6. Thus, when the flow guiding inserts 15, 16 are mounted inside the valve housing 2, the grooves 19 are moved into engagement with the taps 20. If the flow guiding inserts 15, 16 are oriented differently from the correct orientation, it will not be possible to introduce the flow guiding inserts 15, 16 into the valve housing 2, because the taps 20 will block the movement of the flow guiding inserts 15, 16 unless the grooves 19 are arranged at positions corresponding to the taps 20. Thus, it is efficiently ensured that the flow guiding inserts 15, 16 are correctly mounted inside the valve housing 2, thus ensuring that the desired guiding of the fluid flow towards or away from the respective openings 13, 14 is obtained.

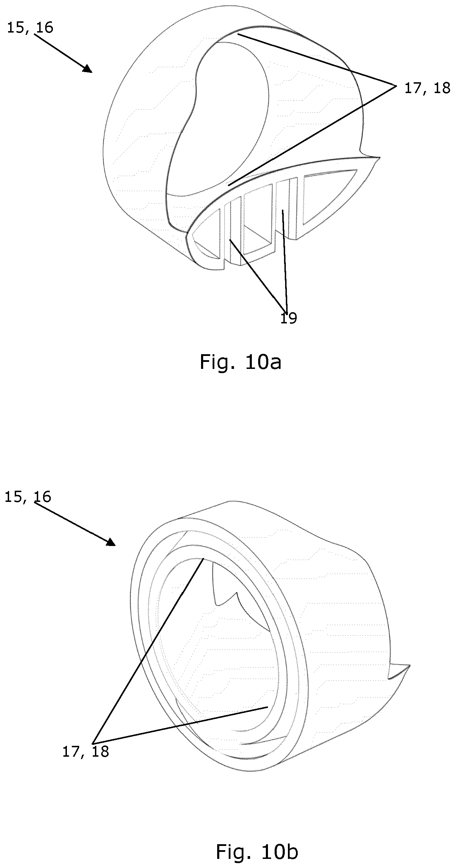

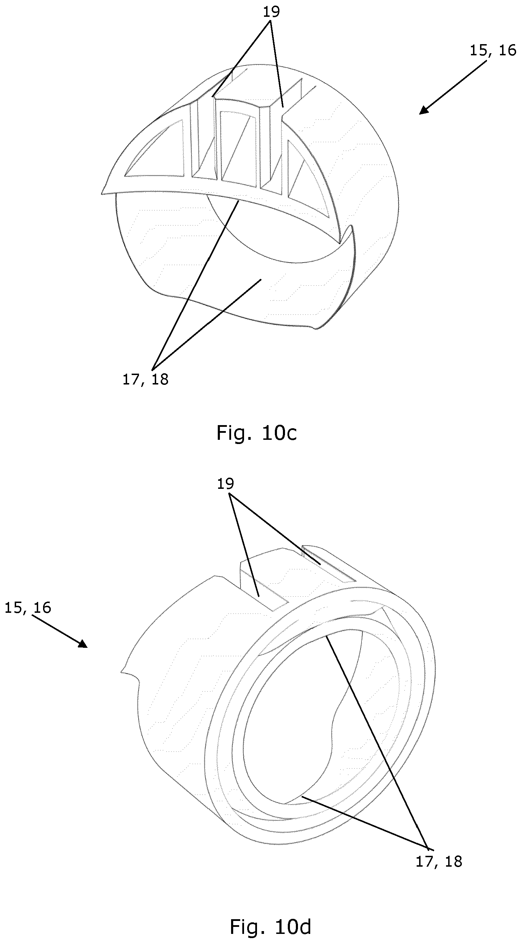

Figs. 10a-10b are perspective views of a flow guiding insert 15, 16 for a valve according to an embodiment of the invention from four different angles. The tapered inner surfaces 17, 18 and the grooves 19 can be clearly seen.

## Claims

1. A valve (1) comprising a valve housing (2) with a first port (4) and a second port (5), the valve housing (2) accommodating a valve element (8) being movable between a first end position and a second end position, the first end position defining a fully open fluid connection between the first port (4) and the second port (5), and the second end position defining a fully closed fluid connection between the first port (4) and the second port (5), and where intermediate positions of the valve element (8) define a partly open fluid connection between the first port (4) and the second port (5),
wherein the valve element (8) is positioned between the first port (4) and the second port (5), and wherein the valve (1) further comprises at least one first flow guiding insert (15) mounted in the valve housing (2) in a flow path interconnecting the first port (4) and the second port (5), so as to guide a fluid flow in the flow path.

2. A valve (1) according to claim 1, wherein the valve element (8) is movable along a first opening (13) towards the second port (5), and wherein the at least one first flow guiding insert (15) is mounted in the valve housing (2) in a flow path interconnecting the first opening (13) and the second port (5), near the first opening (13), so as to guide a fluid flow towards or away from the first opening (13).

3. A valve (1) according to claim 2, wherein the at least one first flow guiding insert (15) defines a tapered inner surface (17), and wherein a cross sectional diameter of a flow path through the at least one first flow guiding insert (15) increases in a direction away from the first opening (13).

4. A valve (1) according to claim 3, wherein the tapered inner surface (17) provides a smooth transition between a cross section defined by the first opening (13) and a cross section defined by the flow path interconnecting the first opening (13) and the second port (5).

5. A valve (1) according to any of claims 2-4, wherein the first opening (13) is provided with a lip along an edge of the first opening (13), the lip abutting the valve element (8) at least in a region near the first opening (13).

6. A valve (1) according to claim 5, wherein the lip follows a tapered or curved path along the edge of the first opening (13).

7. A valve (1) according to any of claims 2-6, wherein the first opening (13) has a shape which is narrower in a region near the second end position than in a region near the first end position.

8. A valve (1) according to any of the preceding claims, wherein the at least one first flow guiding insert (15) is made from a composite material.

9. A valve (1) according to any of the preceding claims, wherein the at least one first flow guiding insert (15) is provided with a mounting interface (19) configured to engage a mating mounting interface (20) formed in the flow path interconnecting the first port (4) and the second port (5).

10. A valve (1) according to any of the preceding claims, wherein the valve (1) is a three-way valve and the valve housing (2) further has a third port (6), and wherein the first end position defines a fully closed fluid connection between the first port (4) and the third port (6) and the second end position defines a fully open fluid connection between the first port (4) and the third port (6), and where intermediate positions of the valve element (8) define partly open fluid connections between the first port (4) and each of the second port (5) and the third port (6).

11. A valve (1) according to claim 10, wherein the valve (1) further comprises at least one second flow guiding insert (16) mounted in the valve housing (2) in a flow path interconnecting the first port (4) and the third port (6), so as to guide a fluid flow in the flow path.

12. A valve (1) according to claim 11, wherein the at least one first flow guiding insert (15) and the at least one second flow guiding insert (16) are identical and mounted in the respective flow paths with different orientation.

13. A valve (1) according to claim 11 or 12, wherein the valve element (8) is further movable along a second opening (14) towards the third port (6), and wherein the at least one second flow guiding insert (14) is mounted in a flow path interconnecting the second opening (14) and the third port (6), so as to guide a fluid flow towards or away from the second opening (14).
